# FASCICULE DE BREVET EUROPEEN

(11) **EP 3 969 282 B1**
(45) Date de publication et mention de la délivrance du brevet: **18.10.2023**
(21) Numéro de dépôt: 20725530.8
(22) Date de dépôt: 12.05.2020
(51) Int. Cl.: B32B 41/00, B29C 70/38

(54) **TORCHE ET PROCÉDÉ DE CHAUFFE PLASMA POUR LE PLACEMENT DE MÈCHES COMPOSITES**
PLASMABRENNER UND VERFAHREN ZUM PLATZIEREN VON VERBUNDROVINGS
PLASMA TORCH AND HEATING METHOD FOR PLACING COMPOSITE ROVINGS

(30) Priorité: 16.05.2019 FR 1905118
(43) Date de publication de la demande: 23.03.2022
(73) Titulaire: Akryvia, 44321 Nantes Cedex 3 (FR)
(72) Inventeur: CAMY-PEYRET, Frédéric, 44000 Nantes (FR)
(74) Mandataire: Marconnet, Sébastien
(86) Numéro de dépôt international: PCT/EP2020/063140
(87) Numéro de publication internationale: WO 2020/229449

(56) Documents cités:
- FR-A1- 2 686 080
- US-A1- 2017 225 413
- US-A1- 2018 117 851
- Anonymous: "Plasma torch - Wikipedia", , 30 juin 2017 (2017-06-30), XP055719905, Extrait de l'Internet: URL:https://web.archive.org/web/2017072310 1649/https://en.wikipedia.org/wiki/Plasma_ torch [extrait le 2020-08-04]

## Description

La présente invention porte sur une torche et un procédé de chauffe plasma pour le placement de mèches composites.

Parmi les technologies de fabrication de pièces en matériaux composites, le placement de mèches, aussi appelées fibres ou bandes pour les plus larges d'entre-elles, est une technique additive de dépose automatisée de plis successifs de matériau composite dans laquelle les mèches, de sections sensiblement plates et formées d'un faisceau de fibres unitaires enrobé d'une matrice en résine thermodurcissable ou thermoplastique, sont déposées sur la pièce à fabriquer, offrant une flexibilité importante dans le placement des mèches permettant de réaliser des pièces de forme complexes avec des zones renforcées et des zones allégées.

Les machines de placement de mèches, sont généralement constituées d'un dispositif de mise en mouvement relatif d'une tête de dépose et d'un support pour la pièce à réaliser, par exemple un robot sur une préforme, ladite préforme pouvant elle aussi être en mouvement, le tout asservi en position et en vitesse par un système à commande numérique.

Par exemple, le document US2018/370152 montre une installation de placement de mèches composites comportant un appareil de chauffage pour chauffer les mèches composites pendant la formation de la couche composite déposée.

Les exemples de pièces ainsi réalisées peuvent être des pièces de structure (ailes, fuselages,..) ou encore des réservoirs par enroulement filamentaire ou la préforme de dépose est un mandrin rotatif.

La mise en place des mèches est généralement réalisée au moyen d'une tête de dépose assurant plusieurs fonctions principales :
- l'amenée et le guidage des mèches, typiquement de 1 à 32 mèches et plus, de largeur ¼' pouce à plusieurs pouces, généralement à l'aide d'un magasin de bobines, emporté ou déporté, et de canaux de guidage des mèches,
- la découpe des mèches, généralement à l'aide de couteaux, à l'extrémité terminale des guides de mèche situés au plus proche de l'endroit de fin de dépôt désiré,
- la chauffe de la fibre et du substrat pour amener les matériaux à la température du procédé d'assemblage : celle de la réaction (généralement inférieure à 100 °C) pour les matrices en résine thermodurcissable, et celle de la fusion de la matrice pour les matrices thermoplastiques, jusqu'à plusieurs centaines de degrés pour les matériaux composites en fibre de carbone à matrice PEEK par exemple,
- l'application d'une force de compaction sur la zone chaude pour maintenir une pression entre les fibres et le substrat, généralement au moyen d'un galet presseur (roller) roulant écrasant les mèches sur le substrat, pendant toute la durée de soudage, consolidation, ou solidification du joint.

Les contraintes auxquelles sont soumises la conception de la tête de dépose et son système de chauffe sont l'encombrement, la tenue thermique, le poids maximal, le coût d'achat et d'opération, la maintenabilité, ainsi que la durée de vie.

Les principales sources de chaleur utilisées pour porter le matériau de la mèche et celui du substrat à la température nécessaire pour le placement de mèches composites sont :
- la chauffe convective par un jet de gaz ou d'air chaud dirigé, tel que mentionné dans le document FR3033729,
- la chauffe par rayonnement à l'aide de sources radiatives :
   o le faisceau laser, tel que décrit dans le brevet US6451152, lumière cohérente de longueur d'onde fixée et de grande directivité spatiale, pointé vers la zone de chauffe, et généralement mis en forme au moyen d'optiques pour obtenir une surface de dépôt du flux de chaleur de hauteur et de largeur précisément adaptées à la largeur les mèches, comme représenté sur la figure 2 de ce document,
   o les lampes à infrarouges, qui chauffent par rayonnement non cohérent, tels que décrits dans le document FR3033729.
- la chauffe hybride mettant en oeuvre simultanément plusieurs des sources de chaleur décrites précédemment, comme illustré dans le document US2018370152 qui présente une source de chauffe composée de lampes infrarouges dont le refroidissement est assuré par un gaz dont le flux est lui-même ensuite dirigé vers la zone de soudage pour contribuer à la chauffe.

Toutefois, les sources laser présentent les inconvénients suivants :
- un coût d'investissement élevé,
- une puissance limitée, par les difficultés technologiques, et par le coût élevé, ce qui limite de facto la productivité du procédé, car il n'est pas possible d'augmenter les taux de dépôt, notamment par l'augmentation des vitesses ou de la largeur ou du nombre des mèches déposées simultanément,
- un mauvais rendement énergétique, au maximum de l'ordre de 20 à 45%, qui nécessite des groupes froids importants, et augmente encore le coût d'achat et de maintenance des installations, et diminue d'autant le rendement énergétique total après prise en compte de la consommation électrique des groupes de refroidissement nécessaire à leur utilisation,
- des problèmes de qualité générés par l'interaction laser-matière différenciée entre la matrice, la plupart du temps transparente à la longueur d'onde des lasers les plus couramment utilisés (autour de 1µm) et les fibres unitaires, parfois très absorbantes (fibres de carbone) à cette même longueur d'onde. Cette absorption différenciée de la chaleur conduit à des points chauds préjudiciables à la qualité du dépôt, et
- un danger lié au faisceau laser, qui oblige dans la plupart des règlementations à capoter l'intégralité de la machine, à mettre en place des dispositifs techniques et humains (formation et habilitation) de contrôle d'accès et de sécurisation qui induisent des surcoûts à l'achat et à l'usage.

Les inconvénients des autres sources de chaleur connues sont les suivants :
- des flux de chaleur limités :
   o les flux de gaz chauds sont ainsi limités pratiquement à 1000°C pour des torches à chauffe électrique, et à des températures maximales théoriques de l'ordre du millier de degrés, par exemple de l'ordre de 2100°C au maximum (température adiabatique de flamme), pour une combustion d'hydrogène dans l'air. L'utilisation de combustibles gazeux présente par ailleurs les inconvénients connus de gestion du risque d'explosion ou d'inflammation accidentelle au stockage ou à la mise en oeuvre.
   ∘ les lampes infrarouges ont un mauvais rendement énergétique, et ne permettent pas d'atteindre des flux élevés, tout en occupant beaucoup de volume dans une zone d'encombrement contrainte.
- une faible cohérence spatiale :
   o les gaz chauds doivent être mobilisés avec un débit élevé, turbulent, à la fois pour transporter plus de chaleur et augmenter l'échange convectif et ont donc une large zone de dépôt d'énergie,
   o les lampes infrarouges rayonnant de manière non directionnelle, elles doivent être installées à proximité immédiate au-dessus des mèches et du substrat, et sur des longueurs importantes en amont du point de compaction pour atteindre l'élévation de température désirée de part et d'autre.

La conséquence de ces deux limitations intrinsèques à la chauffe par sources convectives ou à lampes est qu'elles doivent être mises en oeuvre largement en amont du point de compaction, ce qui encombre inutilement la tête et fait perdre en rendement énergétique.

Le document FR2686080 décrit une tête de dépose équipée de galets d'entraînement de fil et d'une roulette de dépose du fil sur un mandrin, la roulette étant mobile en translation par rapport à l'interface tête-machine distributrice et rappelée contre le mandrin par un ressort. Sur le support de la roulette est monté un pistolet à plasma dont la buse de sortie est orientée en direction de la base de la roulette et du point d'application du fil sur le mandrin.

Le document US2017225413 décrit un procédé de fabrication d'une pièce renforcée, comprenant une étape de réalisation d'une structure porteuse et une étape de revêtement de la structure porteuse, au moins partiellement, avec au moins un matériau composite comportant des fibres de renfort.

Le document US2018117851 décrit des procédés d'impression d'au moins une partie d'un objet tridimensionnel (3D), comprenant la réception, dans une mémoire informatique, d'un modèle de l'objet 3D. Au moins un matériau de filament provenant d'une source peut être déposé sur un substrat qui est configuré pour permettre la réalisation de l'objet 3D.

L'invention vise à remédier efficacement aux inconvénients précités en proposant un système de placement d'une ou plusieurs mèches en matériau composite sur un substrat, ledit système comprenant au moins :
- une tête de dépose de mèches apte à déposer au moins une mèche,
- un générateur électrique, et
- au moins une torche plasma montée sur la tête de dépose de mèches et alimentée en puissance par le générateur électrique,
- ladite torche plasma étant en outre alimentée par au moins un fluide plasmagène pour générer au moins un jet plasma adapté pour chauffer la ou les mèches à déposer sur le substrat, ledit jet plasma étant opéré en régime d'écoulement laminaire.

Les avantages d'une chauffe par jet plasma sont les suivants:
- les températures du jet plasma peuvent atteindre 5000 °C à 20000 °C, c'est-à-dire un niveau 5 à 25 fois supérieur au gaz chaud, permettant ainsi un rendement de transfert de chaleur amélioré d'autant par rapport à tous les dispositifs existants basés sur des gaz chauds,
- le rendement d'un générateur de courant alimentant les torches à plasma d'arc atteint 95% à 98%, ce qui permet de diviser à minima par deux la consommation d'énergie de la source en comparaison au laser,
- le prix d'une source plasma est 6 à 10 fois inférieur à une source laser équivalente,
- la puissance que peut délivrer une source plasma peut être augmentée jusqu'à plusieurs centaines de kilowatts, et au-delà, alors que les lasers industriels les plus puissants sont aujourd'hui limités à 25 kW, et atteignent déjà des coûts prohibitifs.

Ainsi, l'utilisation d'une torche plasma pour chauffer les mèches composites à déposer sur le substrat permet de multiplier la productivité tout en diminuant les coûts.

Selon l'invention, le jet plasma est opéré en régime d'écoulement laminaire. On assure ainsi une stabilité de la chauffe de(s) mèche(s) déposée(s). En effet, l'utilisation de jets plasma laminaires permet de remédier au caractère turbulent des applications de jets plasma classiques qui ont une cohérence spatiale limitée.

Selon une réalisation de l'invention, la torche comporte un support permettant d'orienter le ou les jets plasma vers une ligne de contact, également appelée ligne de compaction, entre la ou les mèches et le substrat pour chauffer des surfaces de la ou des mèches et du substrat proximales à cette ligne de compaction.

Selon une réalisation de l'invention, ledit système comprend en outre un galet presseur destiné à écraser la ou les mèches composites sur le substrat.

Selon une réalisation de l'invention, un écran thermique est placé entre le jet plasma et le galet presseur, ou entre la ou les mèches composites et le galet presseur pour protéger une surface du galet presseur exposée à un flux de chaleur de la torche plasma d'une chauffe excessive.

Selon une réalisation de l'invention, ledit système comprend en outre un écran de confinement aéraulique comprenant deux cloisons de forme sensiblement plane placées de part et d'autre du galet presseur.

Selon une réalisation de l'invention, ledit système de placement de mèches comprend en outre un système de refroidissement pour le galet presseur comprenant au moins un galet refroidisseur en matériau conducteur de la chaleur, ledit galet refroidisseur étant mis en contact avec le galet presseur pour le refroidir par conduction.

Selon une réalisation de l'invention, le générateur électrique comporte un étage primaire commun relié à un réseau d'alimentation électrique assurant au moins une conversion alternatif/continu, et une pluralité d'étages secondaires individuels alimentant chacun en courant régulé de manière indépendante plusieurs électrodes d'une torche plasma à jets multiples ou une pluralité de torches plasma mono-jets opérées simultanément.

Selon une réalisation de l'invention, la torche plasma est apte à générer au moins un jet de refroidissement et de protection gazeuse dirigé vers un pourtour d'une zone de dépose de chaleur désirée, préférentiellement dans une direction sensiblement parallèle à au moins un jet de chauffe plasma, ledit jet de refroidissement et de protection gazeuse étant préférentiellement opéré en régime laminaire, et le jet de refroidissement et de protection gazeuse pouvant être généré soit par une tuyère dédiée, soit par une tuyère plasma opérée à puissance nulle ou très faible par rapport à une puissance de chauffe nominale, par exemple inférieure à 10% de celle-ci et préférentiellement de l'ordre de 2% à 5% de celle-ci.

Selon une réalisation de l'invention, la torche plasma comprend des tuyères aptes à générer, via leurs orifices de sortie, des jets de refroidissement et de protection gazeuse disposés latéralement de part et d'autre d'un jet de chauffe plasma suivant un axe parallèle à une ligne de compaction.

Selon une réalisation de l'invention, les orifices de sortie des jets de refroidissement et de protection gazeuse présentent préférentiellement des sections sensiblement oblongue d'axe perpendiculaire à une direction des orifices de sortie des jets, formant ainsi un jet de forme sensiblement plane perpendiculaire à une ligne de compaction, par exemple de sections de sortie sensiblement rectangle, ovale ou une hybridation de ces deux formes, ou encore sensiblement triangulaire dont le grand coté ou la base est disposé parallèlement à une direction de la ou des mèches à déposer.

Selon une réalisation de l'invention, un fluide pour le ou les jets de refroidissement et de protection gazeuse est constitué d'air comprimé, préférentiellement sec et déshuilé.

Selon une réalisation de l'invention, la torche plasma est apte à générer une pluralité de jets plasmas ayant chacun son alimentation de puissance électrique et/ou son alimentation de débit de gaz pilotable de manière indépendante, lesdits jets plasma étant préférentiellement disposés sensiblement dans un même plan parallèle à une ligne de compaction entre la ou les mèches composites et le substrat.

Selon une réalisation de l'invention, ledit système comporte un système de régulation apte à assurer un contrôle d'une puissance de chauffe par torche plasma comprenant un ou plusieurs dispositifs de mesure de température en un ou plusieurs points d'une zone de chauffe sur le substrat et/ou la ou les mèches en cours de dépôt et dont un signal est apte à être utilisé, directement ou après traitement spatial et/ou temporel, pour asservir une puissance de chauffe plasma à une température de consigne.

Selon une réalisation de l'invention, un fluide plasmagène est constitué d'un mélange argon-azote, préférentiellement comportant 10% à 50% d'argon en volume, préférentiellement 15% à 30% d'argon, et idéalement environ 25% d'argon et le complément d'azote.

L'invention a également pour objet un procédé de placement d'une ou plusieurs mèches en matériau composite sur un substrat mis en oeuvre au moyen d'un système tel que précédemment défini comportant une étape de chauffe d'une ou plusieurs mèches à déposer sur le substrat à l'aide d'au moins un jet plasma.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
[Fig. 1] La figure 1 est représentation schématique en coupe suivant un plan perpendiculaire à l'axe d'un galet presseur, d'un système de placement d'une ou plusieurs mèches en matériau composite sur un substrat;
[Fig. 2] La figure 2 est une représentation schématique d'un générateur électrique comportant des étages secondaires munis de blocs redresseurs secondaires individuels branchés en parallèle sur la sortie d'un étage primaire redresseur commun isolé en entrée à la fréquence du réseau électrique;
[Fig. 3] La figure 3 est une représentation schématique d'un générateur électrique comportant des étages secondaires munis de blocs onduleurs secondaires individuels ayant une isolation haute fréquence branchés en parallèle sur la sortie d'un étage primaire comprenant un redresseur commun et un filtre électrique;
[Fig. 4] La figure 4 montre une torche mono-jet plasma à deux jets de refroidissement et buse commune de protection;
[Fig. 5] La figure 5 montre des exemples de topologies de sections de sortie en face avant de torche mono-jet plasma;
[Fig. 6] La figure 6 montre des exemples de topologie des sections de sortie en face avant de torche mono-jet plasma avec des buses séparées pour la protection et le refroidissement;
[Fig. 7] La figure 7 montre deux variantes de torches multi-jets ou torche plasma à jets laminaire multiples;
[Fig. 8] La figure 8 montre un exemple de profils de puissance électrique de commande de jets plasma et de débit des jets plasma de la torche plasma multi-jets du premier mode de réalisation de la figure 7.

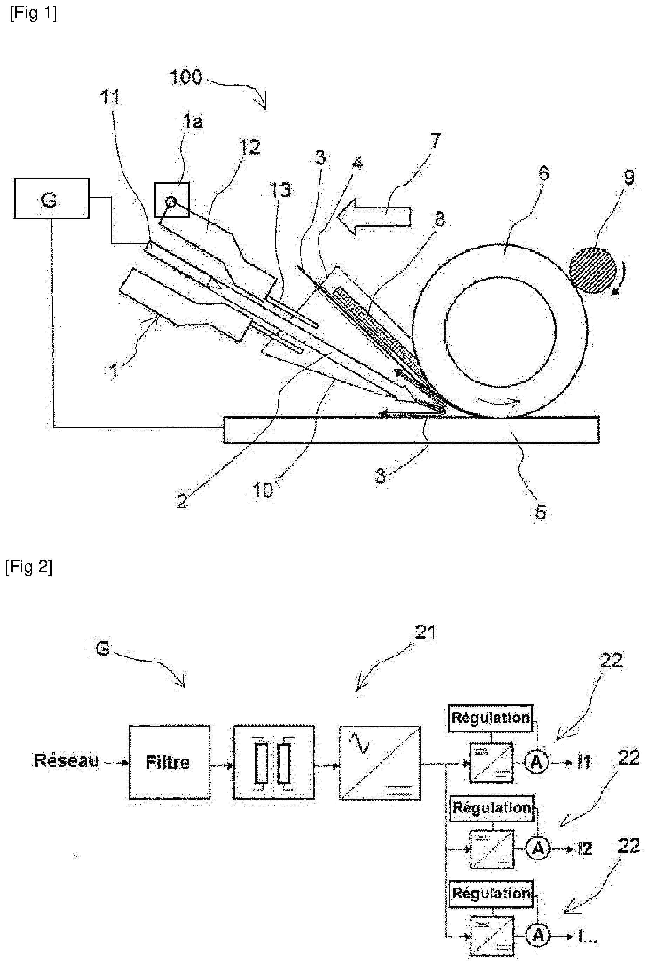

La figure 1 montre un système 100 de placement d'une ou plusieurs mèches 3 en matériau composite sur un substrat 5. Le système 100 comporte une torche plasma 1 alimentée en puissance par un générateur électrique G. La torche plasma 1 est apte à générer un jet plasma 2, de préférence laminaire, pour chauffer une ou plusieurs mèches 3 en matériau composite à déposer sur le substrat 5.

A cet effet, une tête de dépose de mèches 4 sur laquelle est montée la torche plasma 1 assure un guidage de la ou des mèches composites 3 sur le substrat 5.

Un galet presseur 6 écrase la ou les mèches 3 sur le substrat 5. Le galet presseur 6 applique ainsi une force de compaction sur la zone chaude pour maintenir une pression entre les mèches 3 et le substrat 5 lors du déplacement de la tête de dépose 4 suivant le sens de déplacement référencé 7.

Un écran thermique 8 est placé entre le jet plasma 2 et le galet presseur 6, ou entre les mèches et le galet, ou parallèlement aux mèches 3 et jusqu'au plus près de la ligne de contact dans les zones sans mèches 3, pour protéger la surface du galet presseur 6 exposée à un flux de chaleur de la torche plasma d'une chauffe excessive. Cet écran thermique 8 est par exemple de largeur sensiblement égale ou supérieure à la largeur du galet 6. L'écran thermique 8 est réalisé par exemple en matériau réfractaire comme en métal ou une céramique. L'écran thermique 8 présente par exemple une forme générale plane ou incurvée. L'écran thermique 8 est refroidi par exemple par convection naturelle, ou forcée au moyen d'un fluide caloporteur.

Un système de refroidissement pour le galet presseur 6 comprend au moins un galet refroidisseur 9 en matériau conducteur de la chaleur, par exemple en matériau métallique, tel que du cuivre, de l'aluminium ou leurs alliages. Le galet refroidisseur 9 est mis en contact avec le galet presseur 6 pour le refroidir par conduction. Le galet refroidisseur 9 est éventuellement lui-même refroidi par convection naturelle, ou forcée en relation avec un fluide caloporteur, par exemple par le biais de canaux internes ou d'ailettes externes exposées au passage dudit fluide caloporteur.

Un écran de confinement aéraulique 10 comprend par exemple deux cloisons de forme sensiblement plane placées de part et d'autre du galet presseur. Les cloisons ont par exemple une forme couvrant au moins une zone partant du plus proche de la ligne de compaction et s'étendant vers la torche plasma 1 dans la direction sensiblement parallèle au(x) jet(s), et de largeur allant croissante vers l'extrémité de sortie de la torche.

Plus précisément, la torche 1 à plasma d'arc soufflé comprend au moins une électrode 11. L'électrode 11 pourra être constituée de façon classique par une électrode pointue en tungstène massif. En variante, un insert en tungstène pourra être disposé dans une électrode plate en matériau bon conducteur du courant et de la chaleur (cuivre ou alliage). Le tungstène est préférentiellement thorié ou lanthané.

Au moins une tuyère 12 est disposée de manière sensiblement concentrique par rapport à ladite électrode. La tuyère 12 est terminée par une buse commune 13.

Une source primaire de fluide plasmagène pourra être constituée par exemple par une bouteille de gaz ou un réseau de gaz comprimé parmi l'air ou les gaz industriels courants, préférentiellement de l'argon ou de l'azote, préférentiellement un mélange argon-azote, éventuellement un mélange différent pour l'amorçage du plasma (e.g argon pur) de celui utilisé lors de la chauffe en régime permanent. Le mélange peut être réalisé en amont au niveau de la source primaire, dans un mélangeur indépendant avant la torche. Le fluide plasmagène pour la chauffe des mèches comporte de préférence 10% à 50% d'argon en volume, préférentiellement 15% à 30% d'argon, et idéalement environ 25% d'argon et le complément d'azote.

Le système 100 comporte également des éléments d'amenée, de contrôle et de régulation de fluide plasmagène depuis la source de la torche et jusqu'à la tuyère 12, via un système de contrôle et de régulation composé par exemple d'un détendeur, de vannes manuelles ou commandes de fermeture et d'ouverture de la ligne, de tuyaux et de raccords de connexion, avec ou sans prises de branchement rapides pour assurer son injection entre l'électrode 11 et la tuyère 12. On pourra prévoir des moyens de contrôle des pressions et des débits tels que des vannes discrètes ou proportionnelles, des capteurs de pression, de température et/ou de débit, des éléments de guidage et de mise en forme de l'écoulement comme des diffuseurs ajourés ou poreux, avec ou sans formes hélicoïdales de génération d'écoulements tourbillonnaires, ou vortex, de stabilisation du plasma d'arc tels que décrit dans l'état de l'art sur les torches plasma, par exemple de projection thermique ou de coupage, et assurant un caractère laminaire au(x) jet(s) plasma(s) à la sortie de la torche.

Le ou les jets plasma sont caractérisés par l'absence de fluctuations tridimensionnelles de vitesses de l'écoulement et des coefficients de diffusivité apparente, ou effective, dans l'écoulement: viscosité turbulente, nombres de Prandtl et Schmidt turbulents égaux à leurs valeurs physiques dans le fluide plasmagène au repos à ces températures.

Des éléments d'amenée, de contrôle, et de régulation de refroidissement assurent, par contact avec un fluide caloporteur comme de l'eau ou un mélange d'eau et d'antigel, ou un gaz comme de l'air ou le gaz plasmagène lui-même, le refroidissement de la torche 1 et en particulier de ses éléments exposés au plasma d'arc comme la tuyère et l'électrode, etc...

Le générateur électrique G apporte l'énergie au plasma, par exemple par couplage inductif par micro-ondes ou radiofréquences, mais préférentiellement pour des raisons de rendement énergétique par génération de courant entre les bornes connectées à l'électrode 11, préférentiellement par le pôle négatif et à la tuyère 12 (ou leur pluralité), préférentiellement par le pôle positif entre lesquels s'établit un plasma d'arc électrique.

Le système 100 comporte au moins un système d'établissement classique d'un plasma d'arc électrique entre l'électrode 11 et la tuyère 12, par exemple mais de manière non limitative d'un générateur d'étincelle haute tension haute fréquence ou d'un système mécanique de mise en court-circuit temporaire entre l'électrode et la tuyère.

En outre, la torche 1 comporte un support 1a permettant d'orienter le ou les jets plasma 2 vers une ligne de contact (ou ligne de compaction) entre la ou les mèches 3 à déposer et le substrat 5 pour chauffer des surfaces de la ou des mèches 3 et du substrat 5 proximales à cette ligne de contact. Ce support 1a permet de régler, manuellement ou automatiquement, la position relative de la torche 1 par rapport à la ligne d'application de la mèche, tant en angulation qu'en déplacement.

La torche plasma 1 pourra avantageusement être équipée d'un système de tuyère étagée classiquement utilisé dans les torches utilisées en projection thermique permettant d'établir dans un premier temps l'arc entre l'électrode 11 et un premier étage de tuyère relié au générateur par un contacteur, puis de transférer l'arc une fois établi et advecté en aval dans le canal des tuyères à un second étage de tuyère lui aussi relié au générateur et isolé électriquement du premier étage, en ouvrant le contacteur du premier étage de la tuyère.

Lorsque la largeur de la mèche 3 unique à déposer est importante, ou que plusieurs mèches sont déposées simultanément par la tête de dépose 4, la présente invention implique aussi que la ou les torches 1 délivre(nt) une pluralité de jets plasmas ronds, avantageusement disposés dans un même plan parallèle à la ligne de compaction entre le galet 6 et la(les) mèches 3 et le substrat 5 de sorte à former un jet plasma 2 plan à l'impact sur le matériau.

Lorsque la tête de dépose 4 est à multiples mèches 3, l'invention implique qu'un moins un jet plasma 2 ou un groupe de jets plasma régulé indépendamment des autres en puissance et en débit de gaz plasmagène soit disposé en regard de chacune des mèches 3 de sorte de pouvoir contrôler les paramètres de chauffe de la mèche indépendamment des autres.

Les jets à régulation indépendante en courant seront alimentés soit par des générateurs séparés, soit avantageusement par un générateur électrique G comportant un étage primaire commun 21, et des étages secondaires indépendants 22 générant respectivement des courants I1, I2, etc, avec un retour du courant anodique commun à l'étage primaire 21.

Plus précisément, le générateur électrique G comporte un étage primaire commun 21 relié au réseau d'alimentation électrique assurant au moins une conversion alternatif/continu (bloc redresseur), et une pluralité d'étages secondaires 22 individuels alimentant chacun en courant régulé de manière indépendante plusieurs électrodes 11 d'une torche plasma 1 à jets multiples ou une pluralité de torches plasma 1 mono-jets opérées simultanément, lesdites électrodes 11 établissant des arcs formant les jets de plasma, un retour de courant étant collecté à un même pôle commun de l'étage primaire commun 21 du générateur électrique G.

La figure 2 est une représentation schématique d'un générateur électrique G comportant des étages secondaires 22 munis de blocs redresseurs secondaires individuels branchés en parallèle sur la sortie d'un étage primaire 21 redresseur commun isolé en entrée à la fréquence du réseau électrique. L'étage primaire 21 comporte en outre un filtre électrique et un redresseur commun.

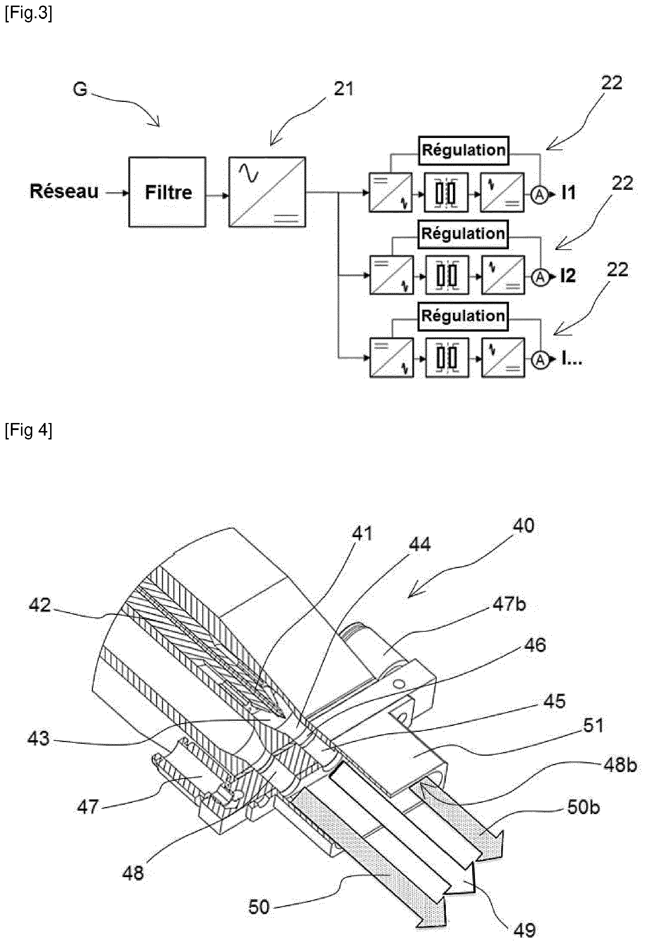

La figure 3 est une représentation schématique d'un générateur électrique G comportant des étages secondaires 22 munis de blocs onduleurs secondaires individuels ayant une isolation haute fréquence branchés en parallèle sur la sortie d'un étage primaire 21 comprenant un redresseur commun et un filtre électrique.

La figure 4 montre par exemple une torche 40 mono-jet plasma à deux jets de refroidissement et buse commune de protection. La torche 40 mono-jet plasma comporte une électrode 41 ayant une extrémité sensiblement conique en tungstène. Un porte-électrode 42 en matériau conducteur est relié au pôle négatif du générateur de courant continu (non représenté). Un diffuseur 43 d'homogénéisation et de laminarisation est réalisé en matériau isolant, par exemple un plastique thermoplastique ou thermodurcissable ou une céramique ou matière minérale. Une tuyère d'amorçage 44 réalisée en matériau conducteur est reliée au pôle positif du générateur via un contacteur de puissance actionnable en charge. La tuyère d'amorçage est préférentiellement refroidie par un liquide de refroidissement à fort pouvoir caloporteur, tel que de l'eau ou de l'huile, circulant dans des canaux non représentés.

Une tuyère de chauffe 45 est réalisée dans un matériau conducteur, notamment en cuivre ou dans un alliage de cuivre. La tuyère de chauffe 45 est reliée au pôle positif du générateur de courant. La tuyère de chauffe 45 est refroidie par un liquide de refroidissement, tel que de l'eau ou de l'huile, circulant dans des canaux non représentés. La torche 40 comporte en outre un intercalaire isolant 46 préférentiellement réalisé en céramique ou dans une matière minérale réfractaire.

Des connecteurs d'alimentation 47 et de retour 47b d'eau de refroidissement sont destinés à être connectés à un circuit de refroidissement. Des tuyères de refroidissement et de protection gauche 48 et droite 48b (non visible) sont disposées de part et d'autre de la tuyère de chauffe 45. Les jets de refroidissement et de protection gazeuse gauche 50 et droit 50b sont ainsi disposés de part et d'autre du jet de chauffe plasma 49.

Une buse commune de protection 51 entoure le jet de chauffe plasma 49 et les jets de refroidissement et de protection 50, 50b. La buse commune 51 s'étend à partir de la section de sortie du jet la plus avale sur une longueur assurant que l'écoulement coalescent soit dirigée vers l'extérieur de la torche (l'aval) en tout point de la section de sortie de ladite buse commune de protection, c'est-à-dire sans recirculation d'air ambiant vers l'intérieur de la buse, avec un ratio de ladite longueur sur la dimension minimale de la section de sortie de ladite buse supérieur à 1, préférentiellement supérieur à 2, et idéalement compris entre 3 et 5.

Les jets laminaires de refroidissement et de protection 50, 50b ont pour fonction de diminuer le flux thermique collatéral dans la direction transversale à la bande à déposer. Les jets 50, 50b sont générés par les tuyères 48, 48b dont les orifices sont placés de part et d'autre de celui de la tuyère de chauffe plasma 49. Les jets 50, 50b présentent une direction sensiblement parallèle au jet plasma et pointent sur les deux zones collatérales à la zone de collage de la bande composite.

Les jets 50, 50b permettent d'éviter la déflection et la coalescence des jets plasmas, par exemple du jet latéral en cas de jets plasma multiples, ou des jets voisins en cas d'extinction d'un des jets plasmas de la torche lorsque la mèche qui lui fait face n'est pas en cours de dépôt.

Les jets 50, 50b permettent également de protéger les jets de chauffe et de refroidissement de l'entrainement d'air ambiant oxydant en leur sein et de maintenir ainsi la zone de chauffe sous protection en atmosphère inerte, par exemple d'azote ou d'argon.

La figure 4 montre un exemple de mise en oeuvre de l'invention à mono-jet plasma laminaire et deux jets de refroidissement et de protection latéraux 50, 50b utilisable par exemple sur une tête de dépose mono-mèche pour machine d'enroulement filamentaire utilisant des mèches d'un quart de pouce (6.35mm) ou d'un demi pouce (12.7 mm) de largeur, avec une électrode de 1.6 à 2.4 mm de diamètre, une tuyère de section de sortie de 3 à 8 mm de diamètre et une intensité d'arc de 20 à 200 ampères.

Un jet de refroidissement 50, 50b est préférentiellement opéré en régime laminaire. Un jet de refroidissement 50, 50b peut être généré soit par une ou des tuyères dédiées comme cela est illustré par la figure 4, soit par une tuyère plasma opérée à puissance nulle ou très faible par rapport à la puissance de chauffe nominale, par exemple inférieure à 10% de celle-ci et préférentiellement de l'ordre de 2% à 5 % de celle-ci.

Un jet de refroidissement 50, 50b peut être régulé de sorte que la vitesse moyenne de sortie du fluide pour ces jets de refroidissement soit fixée à une valeur telle que la pression dynamique moyenne (½ ρV²)_{froid} dans le jet de refroidissement soit sensiblement égale à la pression dynamique (½ ρV²)_{chaud} moyenne du ou des jets plasmas (chauds) voisins.

Le fluide pour le(s) jet(s) de refroidissement 50, 50b est par exemple constitué d'air comprimé, préférentiellement sec et déshuilé.

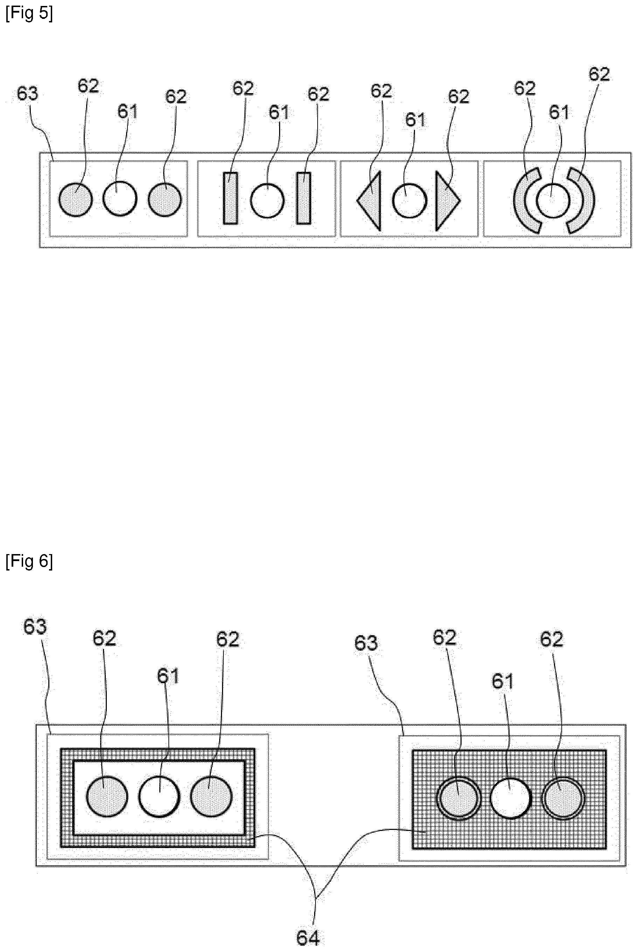

La figure 5 montre des exemples de topologies des sections de sortie en face avant de torche mono-jet plasma. Sur cette figure, la section de sortie de la tuyère formant le jet plasma est référencée 61. Les sections de sortie des tuyères formant les jets de refroidissement et de protection sont référencées 62.

Le contour de la face terminale de la torche est référencé 63.

Ainsi, les sorties des tuyères formant les jets de refroidissement et de protection peuvent avoir des sections 62 de type:
- circulaire, rectangulaire, triangulaire de part et d'autre de la sortie de la tuyère formant le jet plasma, ou
- en arc de cercle entourant sensiblement la sortie de la tuyère formant le jet plasma.

Les orifices de sortie des jets de refroidissement présentent préférentiellement des sections 62 sensiblement oblongues d'axe perpendiculaire à la direction des orifices de sortie des jets, formant ainsi un jet de forme sensiblement plane perpendiculaire à la ligne de compaction, par exemple de sections de sortie sensiblement rectangle, ovale ou une hybridation de ces deux formes, ou encore sensiblement triangulaire dont le grand coté ou la base est disposé parallèlement à la direction des mèches à déposer.

La figure 6 montre des exemples de topologie des sections de sortie en face avant de torche mono-jet plasma avec des buses séparées pour la protection et le refroidissement.

Sur cette figure, la section de sortie de la tuyère formant le jet plasma est référencée 61. Les sections de sortie de(s) buse(s) formant les jets de refroidissement et de protection sont référencées 62. Le contour de la face terminale de la torche est référencé 63. La section de sortie de la ou des buses formant le flux de protection gazeuse est référencé 64.

Dans les modes de réalisation de la figure 6, les jets de refroidissement et de protection 62, dont la pression dynamique (vitesse) est proche des jets plasmas, sont complétés par une buse d'injection 64 d'un flux laminaire de protection gazeuse, de vitesse inférieure destiné à garantir la protection des jets et de la zone de chauffe par une ambiance inerte.

La ou les buse(s) de protection gazeuse 64 peuvent soit entourer l'ensemble des sections de sortie des tuyères formant le jet plasma 61 et les jets de refroidissement et de protection 62 (mode de réalisation de gauche de la figure 6), soit entourer individuellement les sections de sortie des tuyères formant le jet plasma 61 et formant les jets de refroidissement et de protection 62.

Une variante de l'invention consiste en l'utilisation d'une buse commune ou d'une tuyère commune de protection telle que représentée en référence 51 de la figure 4. Cette buse/tuyère commune permet d'isoler les jets plasmas et les jets de refroidissement et de protection de l'air ambiant à l'extérieur de la torche 61. Ainsi, on réduit fortement ou on supprime l'entrainement d'air ambiant par les jets à la sortie de la torche 61.

La torche plasma peut former une pluralité de jets plasmas, avec chacun son alimentation de puissance électrique (par un ou plusieurs générateurs électriques) et/ou son alimentation de débit de gaz pilotable de manière indépendante, lesdits jets plasma étant préférentiellement disposés sensiblement dans un même plan parallèle à la ligne de contact entre la mèche composite à déposer et le substrat.

Les jets plasma ou groupe de jets plasma de la pluralité de jets plasmas peuvent être positionnés sensiblement en face du guide d'amenée de chaque mèche (fibre/bande) de composite de la tête de dépose.

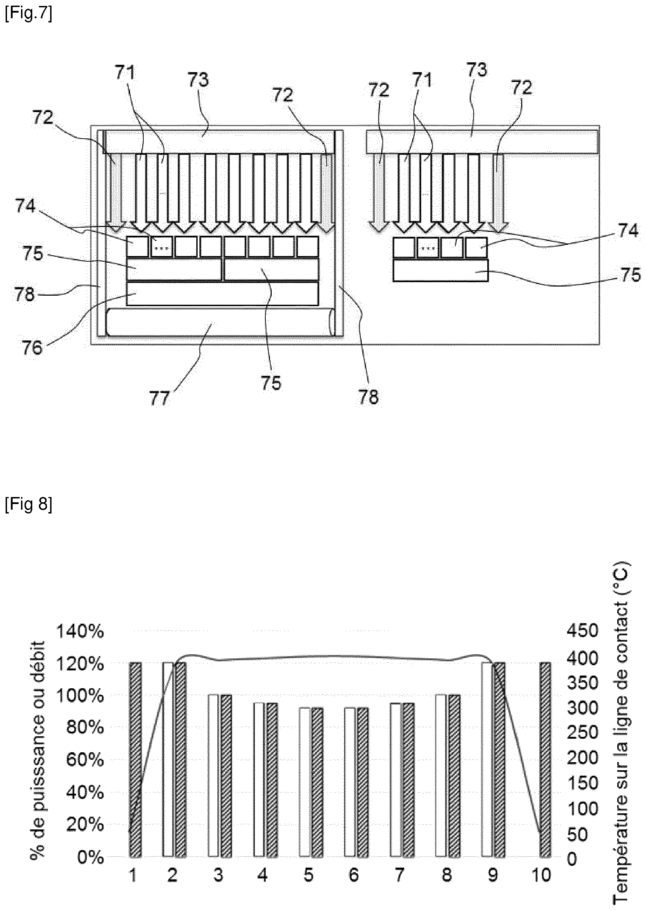

La figure 7 montre deux variantes de torches multi-jets ou torche plasma à jets laminaire multiples. Dans la première variante représentée dans la partie à gauche de la figure 7 est représentée une torche 73 à 8 jets plasmas 71 et deux jets de refroidissement 72 disposés dans un plan parallèle et faisant face en mode d'opération à gauche à huit mèches 74, de par exemple un quart de pouce de largeur (6.35 mm), deux mèches 75 de par exemple d'un pouce (25.4 mm) de largeur ou une bande 76 de par exemple deux pouces de large. On comprend qu'une bande 76 est une mèche composite de grade largeur.

Le diamètre typique des tuyères génératrices des jets plasma laminaires est dans cet exemple de 3 mm, espacé régulièrement de la largeur des bandes (6.35 mm), ou légèrement plus en cas d'espace entre chaque mèche 74, pour des électrodes tungstène de diamètre 1.6 mm, opérée chacune à des courants variables continûment entre 10 et 110 ampères.

Cette disposition comprend en outre des jets latéraux 72 de refroidissement projetés de part et d'autre des jets plasma 71. Les jets latéraux 72 ont une pression dynamique sensiblement égale à la pression dynamique du jet plasma voisin qui supprime la déflection du jet plasma vers l'intérieur de la torche par aspiration (effet Venturi) lié à la dépression dynamique induite par les jets centraux. Lors de l'impact du jet plan ainsi formé sur la ligne de compaction au fond du dièdre, les jets latéraux 72 garantissent que les jets plasma 71 sont déviés parallèlement à la(les) mèche(s) et à l'avance, c'est-à-dire qu'ils continueront à chauffer le substrat et la(les) mèche(s) dans la direction désirée, et ne seront pas défléchis latéralement de part et d'autre le long de la ligne de compaction.

Cet effet est renforcé par la mise en oeuvre de parois 78 à haute tenue thermique, par exemple en céramique faisant obstacle à la déflection latérale du jet plan de part et d'autre du galet 77.

Dans la deuxième variante représentée dans la partie à droite de la figure 7 est représentée la torche à jets plasma 73 précédente pour laquelle la tête est par exemple opérée avec une dépose partielle de mèches 74, 75, par exemple la moitié des mèches 74, 75 ou une mèche 74, 75 sur deux, les tuyères adjacentes aux jets plasmas sont opérées à puissance nulle ou minimale, générant un jet de refroidissement assurant les mêmes fonctions que les jets de refroidissement latéraux 72.

La figure 8 montre un exemple de profils de puissance électrique de commande des jets plasma et de débit des jets plasma de la torche plasma multi-jets de la première variante précédente (partie à gauche de la figure 7) par les barres verticales d'indices 2 à 9, et les débit des jets de refroidissement aux indices 1 et 10.

En outre, la courbe en trait continu sur cette figure représente une mesure de la température sur la ligne de contact le long de cette ligne.

Ainsi, les profils de puissance électrique de commande des jets plasma et de débit des jets plasma de la torche plasma 1 sont adaptés et prédéterminés expérimentalement une fois pour toute ou adapté par une régulation en temps réel basée sur au moins une mesure des températures le long de la ligne de contact. Avantageusement, ces adaptations sont effectuées dans le but d'obtenir un profil de température sensiblement plat ou constant le long de la ligne de contact. Eventuellement, un profil de température particulier peut être déterminé, par exemple en fonction du ou des matériaux des mèches (si des mèches de divers matériaux sont utilisés) ou en fonction du substrat, ou en fonction de caractéristiques désirées du produit, ou de la vitesse d'avancée des mèches de tout autre paramètre.

La ou les mesures de températures le long de la ligne de contact peut (peuvent) être effectuées par exemple par tout capteur de mesure de température sans contact, tel qu'un capteur laser, ou un pyromètre, ou une caméra thermique (e.g. caméra infrarouge).

Ainsi, on pourra utiliser un système de régulation pour le contrôle de la puissance de chauffe par torche plasma comportant un ou plusieurs dispositifs de mesure de température en un ou plusieurs points de la zone de chauffe sur le substrat et/ou la ou les mèches en cours de dépôt et dont le signal est utilisé, directement ou après traitement spatial et/ou temporel, pour asservir la puissance de chauffe plasma à une température de consigne. La puissance de la torche peut alors être pilotée par une régulation du courant du générateur électrique qui alimente la torche plasma, ledit courant ayant tendance à être augmenté lorsque la température mesurée est inférieure à la température de consigne, et ledit courant ayant tendance à être réduit dans le cas contraire.

Le système de régulation de la puissance de chauffe précédent peut comprendre une régulation couplée du courant et du débit de gaz plasmagène alimentant la torche ou les jets dont la logique de commande est basée sur des signaux de mesure de la tension d'arc aux bornes de la torche, ledit débit étant limité de sorte que la tension d'arc ne dépasse pas un seuil prédéterminé dépendant de l'intensité.

La tuyère du jet plasma ou partie de tuyère pour la génération des jets plasma peut être régulée indépendamment en courant sur des circuits électrode respectifs, et cette tuyère du jet plasma assure le rôle d'anode commune de collection du courant pour tous les jets plasma.

Le procédé de placement d'une ou plusieurs mèches en matériau composite sur un substrat, pourra comprendre un mode de régulation individuelle de puissance de(s) jet(s) plasma de la torche plasma. Le mode de régulation est avantageusement de type "veilleuse", déclenché par une consigne discrète, dans lequel la puissance de chauffe est réduite à un minimum permettant d'assurer le maintien stable du plasma d'arc électrique en régulant le courant à son minimum technique, et le débit à son minimum technique, mode d'opération préférentiellement déclenché pendant les phases de transfert de la tête d'un point à l'autre de la pièce sans dépose, ou lorsque la bande située en face du jet plasma n'est pas déposée.

En variante, un mode de régulation individuelle de puissance de(s) jet(s) plasma de la torche plasma est de type "jet froid" déclenché par une consigne d'activation discrète, i.e. ON/OFF, dans lequel la puissance de chauffe est réduite à zéro, et le débit est régulé à une valeur non nulle, mode d'opération préférentiellement déclenché pendant les phases de transfert de la tête d'un point à l'autre de la pièce sans dépose, ou lorsque la bande située en face du jet plasma n'est pas déposée, et idéalement déclenché après un mode d'opération à puissance réduite pendant une durée qui dépasse une durée de consigne.

Bien entendu, les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

En outre, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association.

## Revendications

1. Système (100) de placement d'une ou plusieurs mèches (3) en matériau composite sur un substrat (5), **caractérisé en ce que** ledit système comprend au moins:
- une tête de dépose de mèches (4) apte à déposer au moins une mèche (3),
- un générateur électrique (G), et
- au moins une torche plasma (1) montée sur la tête de dépose de mèches (4) et alimentée en puissance par le générateur électrique,
- ladite torche plasma (1) étant en outre alimentée par au moins un fluide plasmagène pour générer au moins un jet plasma (2) adapté pour chauffer la ou les mèches (3) à déposer sur le substrat,
- ledit jet plasma (2) étant opéré en régime d'écoulement laminaire.

2. Système selon la revendication 1, **caractérisé en ce que** la torche (1) comporte un support (1a) permettant d'orienter le ou les jets plasma (2) vers une ligne de contact, également appelée ligne de compaction, entre la ou les mèches (3) et le substrat (5) pour chauffer des surfaces de la ou des mèches (3) et du substrat (5) proximales à cette ligne de compaction.

3. Système selon la revendication 1 ou 2, **caractérisé en ce qu'**il comprend en outre un galet presseur (6) destiné à écraser la ou les mèches composites (3) sur le substrat (5).

4. Système selon la revendication 3, **caractérisé en ce qu'**un écran thermique (8) est placé entre le jet plasma (2) et le galet presseur (6), ou entre la ou les mèches composites (3) et le galet presseur (6) pour protéger une surface du galet presseur (6) exposée à un flux de chaleur de la torche plasma d'une chauffe excessive.

5. Système selon la revendication 3 ou 4, **caractérisé en ce qu'**il comprend en outre un écran de confinement aéraulique (10) comprenant deux cloisons de forme sensiblement plane placées de part et d'autre du galet presseur (6).

6. Système selon l'une quelconque des revendications 3 à 5, **caractérisé en ce qu'**il comprend en outre un système de refroidissement pour le galet presseur (6) comprenant au moins un galet refroidisseur (9) en matériau conducteur de la chaleur, ledit galet refroidisseur (9) étant mis en contact avec le galet presseur (6) pour le refroidir par conduction.

7. Système selon l'une quelconque des revendications 1 à 6, **caractérisé en ce que** le générateur électrique (G) comporte un étage primaire (21) commun relié à un réseau d'alimentation électrique assurant au moins une conversion alternatif/continu, et une pluralité d'étages secondaires (22) individuels alimentant chacun en courant régulé de manière indépendante plusieurs électrodes (11) d'une torche plasma (1) à jets multiples ou une pluralité de torches plasma (1) mono-jets opérées simultanément.

8. Système selon l'une quelconque des revendications 1 à 7, **caractérisé en ce que** la torche plasma (1) est apte à générer au moins un jet de refroidissement et de protection gazeuse (50, 50b) dirigé vers un pourtour d'une zone de dépose de chaleur désirée, préférentiellement dans une direction sensiblement parallèle à au moins un jet de chauffe plasma, ledit jet de refroidissement et de protection gazeuse (50, 50b) étant préférentiellement opéré en régime laminaire, et le jet de refroidissement et de protection gazeuse (50, 50b) pouvant être généré soit par une tuyère dédiée, soit par une tuyère plasma opérée à puissance nulle ou très faible par rapport à une puissance de chauffe nominale, par exemple inférieure à 10% de celle-ci et préférentiellement de l'ordre de 2% à 5% de celle-ci.

9. Système selon l'une quelconque des revendications 1 à 8, **caractérisé en ce que** la torche plasma (1) comprend des tuyères (48, 48b) aptes à générer, via leurs orifices de sortie, des jets de refroidissement et de protection gazeuse (50, 50b) disposés latéralement de part et d'autre d'un jet de chauffe plasma (49) suivant un axe parallèle à une ligne de compaction.

10. Système selon la revendication 9, **caractérisé en ce que** les orifices de sortie des jets de refroidissement et de protection gazeuse (50, 50b) présentent préférentiellement des sections sensiblement oblongue d'axe perpendiculaire à une direction des orifices de sortie des jets, formant ainsi un jet de forme sensiblement plane perpendiculaire à une ligne de compaction, par exemple de sections de sortie (62) sensiblement rectangle, ovale ou une hybridation de ces deux formes, ou encore sensiblement triangulaire dont le grand coté ou la base est disposé parallèlement à une direction de la ou des mèches à déposer.

11. Système selon l'une quelconque des revendications 8 à 10, **caractérisé en ce qu'**un fluide pour le ou les jets de refroidissement et de protection gazeuse (50, 50b) est par exemple constitué d'air comprimé, préférentiellement sec et déshuilé.

12. Système selon l'une quelconque des revendications 1 à 11, **caractérisé en ce que** la torche plasma est apte à générer une pluralité de jets plasmas (71) ayant chacun son alimentation de puissance électrique et/ou son alimentation de débit de gaz pilotable de manière indépendante, lesdits jets plasma (71) étant préférentiellement disposés sensiblement dans un même plan parallèle à une ligne de compaction entre la ou les mèches composites (3) et le substrat (5).

13. Système selon l'une quelconque des revendications 1 à 12, **caractérisé en ce qu'**il comporte un système de régulation apte à assurer un contrôle d'une puissance de chauffe par torche plasma comprenant un ou plusieurs dispositifs de mesure de température en un ou plusieurs points d'une zone de chauffe sur le substrat (5) et/ou la ou les mèches (3) en cours de dépôt et dont un signal est apte à être utilisé, directement ou après traitement spatial et/ou temporel, pour asservir une puissance de chauffe plasma à une température de consigne.

14. Système selon l'une quelconque des revendications 1 à 13, **caractérisé en ce qu'**un fluide plasmagène est constitué d'un mélange argon-azote, préférentiellement comportant 10% à 50% d'argon en volume, préférentiellement 15% à 30% d'argon, et idéalement environ 25% d'argon et le complément d'azote.

15. Procédé de placement d'une ou plusieurs mèches (3) en matériau composite sur un substrat mis en oeuvre au moyen d'un système tel que défini selon l'une quelconque des revendications précédentes comportant une étape de chauffe d'une ou plusieurs mèches (3) à déposer sur le substrat à l'aide d'au moins un jet plasma (2).

## Patentansprüche

1. System (100) zum Platzieren eines oder mehrerer Stäbe (3) aus einem Verbundmaterial auf einem Substrat (5), **dadurch gekennzeichnet, dass** das System mindestens umfasst:
- einen Stabablagekopf (4), der mindestens einen Stab (3) ablegen kann,
- einen elektrischen Generator (G) und
- mindestens einen Plasmabrenner (1), der am Stabablagekopf (4) montiert ist und vom elektrischen Generator mit Strom versorgt wird,
- wobei der Plasmabrenner (1) außerdem mit mindestens einem plasmaerzeugenden Fluid versorgt wird, um mindestens einen Plasmastrahl (2) zu erzeugen, der zum Erhitzen des oder der auf dem Substrat abzulegenden Stabs bzw. Stäbe (3) geeignet ist,
- wobei der Plasmastrahl (2) in einem laminaren Strömungsbereich betrieben wird.

2. System nach Anspruch 1, **dadurch gekennzeichnet, dass** der Brenner (1) einen Träger (1a) aufweist, der es ermöglicht, den Plasmastrahl oder die Plasmastrahlen (2) auf eine Kontaktlinie, auch Verdichtungslinie genannt, zwischen dem Stab order den Stäben (3) und dem Substrat (5) zu richten, um Oberflächen des Stabs oder der Stäbe (3) und des Substrats (5) zu erhitzen, die dieser Verdichtungslinie nahe liegen.

3. System nach Anspruch 1 oder 2, **dadurch gekennzeichnet, dass** es außerdem eine Andruckwalze (6) zum Zerdrücken des Verbundstabs oder der Verbundstäbe (3) auf dem Substrat (5) umfasst.

4. System nach Anspruch 3, **dadurch gekennzeichnet, dass** zwischen dem Plasmastrahl (2) und der Andruckwalze (6) bzw. zwischen dem Verbundstab oder den Verbundstäben (3) und der Andruckwalze ein Hitzeschild (8) angeordnet ist, um eine einem Wärmefluss vom Plasmabrenner ausgesetzten Oberfläche der Andruckrolle (6) vor übermäßiger Erwärmung schützen.

5. System nach Anspruch 3 oder 4, **dadurch gekennzeichnet, dass** es außerdem einen Luftstrom-Eindämmungsschild (10) umfasst, der zwei im Wesentlichen flach geformte Trennwände umfasst, die auf beiden Seiten der Andruckwalze (6) angeordnet sind.

6. System nach einem der Ansprüche 3 bis 5, **dadurch gekennzeichnet, dass** es außerdem ein Kühlsystem für die Andruckwalze (6) umfasst, welches mindestens eine Kühlwalze (9) aus einem wärmeleitenden Material umfasst, wobei die Kühlwalze (9) mit der Andruckwalze (6) in Kontakt gebracht wird, um diese durch Wärmeleitung zu kühlen.

7. System nach einem der Ansprüche 1 bis 6, **dadurch gekennzeichnet, dass** der elektrische Generator (G) eine gemeinsame Primärstufe (21), die an ein elektrisches Stromversorgungsnetz angeschlossen ist, das mindestens eine AC/DC-Umwandlung bereitstellt, und eine Mehrheit einzelner Sekundärstufen (22), die jeweils mit unabhängig voneinander geregelte Ströme mehrere Elektroden (11) eines Mehrstrahl-Plasmabrenners (1) oder eine Mehrheit gleichzeitig betriebener Einstrahl-Plasmabrenner (1) versorgen, umfasst.

8. System nach einem der Ansprüche 1 bis 7, **dadurch gekennzeichnet, dass** der Plasmabrenner (1) mindestens einen Kühl- und Gasschutzstrahl (50, 50b) erzeugen kann, der auf eine Peripherie einer gewünschten Wärmeablagezone, vorzugsweise in einer Richtung im Wesentlichen parallel zu mindestens einem Plasmaheizstrahl, gerichtet ist, wobei der Kühl- und Gasschutzstrahl (50, 50b) vorzugsweise in einem laminaren Modus betrieben wird und wobei der Kühl- und Gasschutzstrahl (50, 50b) durch eine spezielle Düse oder durch eine Plasmadüse, die mit einer Nullleistung oder einer sehr geringen Leistung im Vergleich zur Nennheizleistung, beispielsweise weniger als 10% und vorzugsweise im Bereich von 2% bis 5% davon, betrieben wird, erzeugt werden kann entweder.

9. System nach einem der Ansprüche 1 bis 8, **dadurch gekennzeichnet, dass** der Plasmabrenner (1) Düsen (48, 48b) umfasst, die über ihre Austrittsöffnungen Kühl- und Gasschutzstrahlen (50, 50b), die seitlich auf beiden Seiten eines Plasmaheizstrahls (49) entlang einer Achse parallel zu einer Verdichtungslinie angeordnet sind, erzeugen können.

10. System nach Anspruch 9, **dadurch gekennzeichnet, dass** die Austrittsöffnungen für die Kühl- und Gasschutzstrahlen (50, 50b) vorzugsweise im Wesentlichen längliche Abschnitte mit einer zur Richtung der Austrittsöffnungen der Strahlen senkrechten Achse aufweisen, wodurch sie einen im Wesentlichen flach geformten und zu einer Verdichtungslinie senkrechten Strahl, beispielsweise mit Austrittsabschnitten (62) mit einer im Wesentlichen rechteckigen Form oder einer ovale Form oder einer Kombination davon oder sogar einer im Wesentlichen dreieckige Form, deren große Seite oder Basis parallel zu Richtung des abzulegenden Stabs oder der abzulegenden Stäbe angeordnet ist, bilden.

11. System nach einem der Ansprüche 8 bis 10, **dadurch gekennzeichnet, dass** ein Fluid für die Kühl- und Gasschutzdüse(n) (50, 50b) beispielsweise aus Druckluft, vorzugsweise trockener und entölter Druckluft, besteht.

12. System nach einem der Ansprüche 1 bis 11, **dadurch gekennzeichnet, dass** der Plasmabrenner eine Mehrheit von Plasmastrahlen (71) erzeugen kann, die jeweils über eine unabhängig betreibbare Stromversorgung und/oder Gasstromversorgung verfügen, wobei vorzugsweise die Plasmastrahlen (71) im Wesentlichen in derselben zu einer Verdichtungslinie parallelen Ebene zwischen dem Verbundstab oder den Verbundstäben (3) und dem Substrat (5) angeordnet sind.

13. System nach einem der Ansprüche 1 bis 12, **dadurch gekennzeichnet, dass** es ein Regelsystem umfasst, das die Heizleistung für jeden Plasmabrenner regeln kann und eine oder mehrere Temperaturmessvorrichtungen an einem oder mehreren Punkten einer Heizungszone am Substrat (5) und/oder an dem abzulegenden Stab oder den abzulegenden Stäben (3) umfasst und dessen Signal direkt oder nach einer räumlichen und/oder zeitlichen Verarbeitung verwendet werden kann, um eine Plasmaheizleistung auf Basis einer Solltemperatur zu steuern.

14. System nach einem der Ansprüche 1 bis 13, **dadurch gekennzeichnet, dass** eine Plasmafluid aus einem Argon-Stickstoff-Gemisch besteht, dessen Volumenanteil an Argon vorzugsweise zwischen 10% und 50%, vorzugsweise 15% bis 30 %, idealerweise etwa 25% beträgt, wobei der Rest Stickstoff ist.

15. Verfahren zum Platzieren eines oder mehrerer Stäben (3) aus einem Verbundmaterial auf einem Substrat, wobei das Verfahren mittels eines Systems nach einem der vorhergehenden Ansprüche durchgeführt wird und einen Schritt des Erhitzens eines oder mehrerer mittels mindestens eines Plasmastrahls (2) auf dem Substrat abzuscheidenden Stäben (3) umfasst.

## Claims

1. A system (100) for placing one or more rovings (3) in a composite material on a substrate (5), **characterized in that** said system comprises at least:
- one roving depositing head (4) able to deposit at least one roving (3),
- one electric generator (G), and
- at least one plasma torch (1) mounted on the roving depositing head (4) and supplied with power by the electric generator,
- said plasma torch (1) being further supplied with at least one plasma-generating fluid to generate at least one plasma jet (2) suitable for heating the roving(s) (3) to be deposited on the substrate,
- said plasma jet (2) being operated in a laminar flow regime.

2. The system according to claim 1, **characterized in that** the torch (1) comprises a support (1a) making it possible to direct the plasma jet(s) (2) towards a contact line, also called compaction line, between the roving(s) (3) and the substrate (5) to heat surfaces of the roving(s) (3) and the substrate (5) which are proximal to this compaction line.

3. The system according to claim 1 or 2, **characterized in that** it further comprises a pressure roller (6) for crushing the composite roving(s) (3) on the substrate (5).

4. The system according to claim 3, **characterized in that** a heat shield (8) is placed between the plasma jet (2) and the pressure roller (6), or between the composite roving(s) (3) and the pressure roller (6) to protect a surface of the pressure roller (6) exposed to a heat flux from the plasma torch from excessive heating.

5. The system according to claim 3 or 4, **characterized in that** it further comprises an airflow containment shield (10) comprising two substantially flat-shaped partitions placed on either side of the pressure roller (6).

6. The system according to any of the claims 3 to 5, **characterized in that** it further comprises a cooling system for the pressure roller (6) comprising at least one cooling roller (9) in a heat-conducting material, said cooling roller (9) being brought into contact with the pressure roller (6) to cool it by conduction.

7. The system according to any of the claims 1 to 6, **characterized in that** the electric generator (G) comprises a common primary stage (21) connected to an electric power supply network providing at least one AC/DC conversion, and a plurality of individual secondary stages (22) respectively supplying currents which are independently regulated to several electrodes (11) of a multiple-jet plasma torch (1) or a plurality of single-jet plasma torches (1) operated simultaneously.

8. The system according to any of the claims 1 to 7, **characterized in that** the plasma torch (1) is able to generate at least one cooling and gaseous protection jet (50, 50b) directed towards a periphery of a desired heat deposition zone, preferably in a direction substantially parallel to at least one plasma heating jet, said cooling and gaseous protection jet (50, 50b) being preferably operated in a laminar mode, and the cooling and gaseous protection jet (50, 50b) which can be generated either by a dedicated nozzle, or by a plasma nozzle operated at zero or very low power compared to a nominal heating power, for example less than 10% and preferably in the range of 2% to 5% thereof.

9. The system according to any of the claims 1 to 8, **characterized in that** the plasma torch (1) comprises nozzles (48, 48b) capable of generating, via their outlet orifices, cooling and gaseous protective jets (50, 50b) arranged laterally on either side of a plasma heating jet (49) along an axis parallel to a compaction line.

10. The system according to claim 9, **characterized in that** the outlet orifices of the cooling and gaseous protection jets (50, 50b) preferably have substantially oblong sections with an axis perpendicular to a direction of the outlet orifices of the jets, thereby forming a substantially flat-shaped jet perpendicular to a compaction line, for example with outlet sections (62) which have substantially rectangular shape or an oval shape or a combination thereof, or even a substantially triangular shape, whose large side or base is arranged parallel to a direction of the roving(s) to be deposited.

11. The system according to any of the claims 8 to 10, **characterized in that** a fluid for the cooling and gaseous protection jet(s) (50, 50b) is for example made out of compressed air, preferably dry and de-oiled.

12. The system according to any of the claims 1 to 11, **characterized in that** the plasma torch is able to generate a plurality of plasma jets (71) each having its electric power supply and/or its gas flow supply, which is independently operable, said plasma jets (71) preferably being arranged substantially in the same plane parallel to a compaction line between the composite roving(s) (3) and the substrate (5).

13. The system according to any of the claims 1 to 12, **characterized in that** it comprises a regulation system, which can regulate a plasma torch heating power and comprises one or more temperature measuring devices at one or several points of a heating zone on the substrate (5) and/or the roving(s) (3) to be deposited and whose signal can be used, directly or after a spatial and/or temporal processing, to control a plasma heating power on the basis of a set temperature.

14. The system according to any of the claims 1 to 13, **characterized in that** a plasma fluid is made out of an argon-nitrogen mixture, whose volume-percentage of argon is preferably comprised between 10% to 50%, preferably 15% to 30%, and ideally is about 25%, the balance being nitrogen.

15. A method of placing one or more rovings (3) in a composite material on a substrate, said method being implemented by means of a system as defined according to any one of the preceding claims and comprising a step of heating one or more rovings (3) to be deposited on the substrate by using at least one plasma jet (2).
